Europäisches Patentamt

**European Patent Office**

Office européen des brevets

(11) Veröffentlichungsnummer: **0 260 540**

**A2**

(12) **EUROPÄISCHE PATENTANMELDUNG**

(21) Anmeldenummer: **87112897.1**

(22) Anmeldetag: **03.09.87**

(51) Int. Cl.⁴: **G06F 7/58**

(30) Priorität: **12.09.86 DE 3631127**

(43) Veröffentlichungstag der Anmeldung:
**23.03.88 Patentblatt 88/12**

(84) Benannte Vertragsstaaten:
**AT BE CH DE ES FR GB GR IT LI NL SE**

(71) Anmelder: **Siemens Aktiengesellschaft Berlin und München**
**Wittelsbacherplatz 2**
**D-8000 München 2(DE)**

(72) Erfinder: **Krenzer, Hanns Ulrich**
**Possenhofener Strasse 8**
**D-8000 München 71(DE)**

(54) **Schaltungsanordnung zur Generierung einer Zufallszahl für die verschlüsselte Übertragung von Daten.**

㊼57 Die Schaltungsanordnung ist gekennzeichnet durch zwei mit unterschiedlicher Frequenz astabil - schwingende Generatoren, deren Ausgänge mit den Eingängen eines UND-Gliedes verbunden sind und durch einen weiteren astabil schwingenden Generator mit einer im Vergleich zur Frequenz der beiden ersten Generatoren deutlich höheren Frequenz, der eingangsseitig mit dem Ausgang des UND-Gliedes und ausgangsseitig mit dem Eingang eines Zählers verbunden ist.

EP 0 260 540 A2

# Schaltungsanordnung zur Generierung einer Zufallszahl für die verschlüsselte Übertragung von Daten

Die Erfindung bezieht sich auf eine Schaltungsanordnung zur Generierung einer Zufallszahl für die verschlüsselte Übertragung von Daten gemäß den Merkmalen des Oberbegriffs des Anspruchs 1.

In modernen Datenverarbeitungs-und Kommunikationssystemen spielt der Schutz der Daten eine immer wichtigere Rolle. Die Qualität eines Systems in Bezug auf einen ausreichenden Datenschutz hängt dabei entscheidend davon ab, inwieweit es gelingt, daß der Zugriff zum System nur für berechtigte Personen möglich ist und umgekehrt nichtberechtigte Personen mit absoluter Sicherheit ausgesperrt bleiben.

Eine einfache, wenn auch nicht absolut sichere Möglichkeit zur Überprüfung der Zugriffsberechtigung zu einem System sind z.B. sogenannte Passwörter, die nur dem berechtigten Benutzer bekannt sind und die vom Benutzer beliebig oft geändert werden können. Da bei Passwörtern die Gefahr besteht, daß sie von Unbefugten ausgespäht oder abgehört werden können, sind zusätzliche Sicherungsmaßnahmen unverzichtbar. Eine dieser Maßnahmen ist z.B. die Ver-und Entschlüsselung der übertragenen Information, eine Maßnahme, die bei Datenverarbeitungssystemen u.a. auch mit Hilfe der Chipkarte realisierbar ist.

Mit der zunehmenden Einbeziehung der Chipkarte in Datenverarbeitungssysteme entsteht andererseits wieder ein zusätzliches Sicherheitsrisiko, weil Chipkarten relativ leicht verlorengehen können. Es muß deshalb unbedingt dafür gesorgt werden, daß die Chipkarte bei Verlust in jedem Fall vor einem eventuellen Mißbrauch geschützt ist. Die Chipkarte ist deshalb so konzipiert, daß auf die in einer gesicherten Chipkarte gespeicherten Daten nur dann zugegriffen werden kann, wenn vom Benutzer vorab ein nur in der Chipkarte abgespeicherter Identifikator, beispielsweise eine persönliche Identifikationsnummer, die sogenannte PIN, eingegeben wird.

Eine weitere Sicherheitsbarriere kann mit Hilfe der Authentifikation der Chipkarte zum System aufgebaut werden. Diese Authentifikation verhindert, daß ein beliebiger Teilnehmer durch die Vorgabe, befugt zu sein, an geheime Informationen im System gelangen kann. Eine wesentliche Voraussetzung für die Authentifikation ist ein persönliches, nicht kopierbares Merkmal des Teilnehmers. Dieses nicht kopierbare Merkmal des Teilnehmers wird mit Hilfe eines geheimen Schlüssels für die Ver-und Entschlüsselung erreicht, der den beiden Partnern, d.h. einerseits der Chipkarte und andererseits dem System, und zwar nur diesen beiden Partnern bekannt ist. Ein solcher gemeinsamer geheimer Schlüssel kann z.B. eine variable Zufallszahl sein, die beim Datentransfer von der Chipkarte an das System übertragen wird. Es wäre an sich denkbar, diese Zufallszahlen programmtechnisch zu erzeugen. Nach Ansicht von Sicherheitsexperten sind derart erzeugte Zufallszahlen aber nicht zufällig genug und damit letztlich nicht sicher genug.

Der vorliegenden Erfindung liegt daher die Aufgabe zugrunde, für die Erzeugung von Zufallszahlen eine möglichst einfache Schaltungsanordnung anzugeben, die dennoch höchsten Sicherheitsanforderungen genügt.

Diese Aufgabe wird erfindungsgemäß durch die kennzeichnenden Merkmale des Anspruchs 1 gelöst. Eine derart aufgebaute Schaltung hat vor allem den Vorteil, daß sie ohne Schwierigkeiten in hochintegrierter Schaltungstechnik, beispielsweise mit handelsüblichen TTL-Gattern oder in MOS-Technik realisierbar ist. Sie eignet sich damit insbesondere für eine Implementierung in integrierten Bausteinen einer Chipkarte.

Vorteilhafte Weiterbildungen des Erfindungsgedankens sind in den Unteransprüchen angegeben.

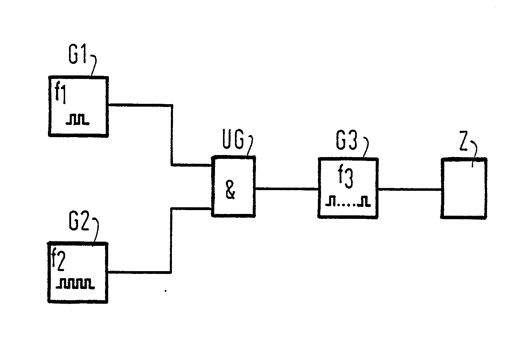

Im folgenden wird ein Ausführungsbeispiel der Erfindung anhand der Zeichnung näher erläutert.

Die in der Figur dargestellte Schaltung zur Generierung von Zufallszahlen besteht aus zwei ersten astabil schwingenden Generatoren G1, G2, deren unterschiedliche Betriebsfrequenzen f1, f2 sich beispielsweise um den Faktor 2 bis 3 voneinander unterscheiden. Die Ausgänge der beiden asynchron arbeitenden Generatoren werden über ein UNDGlied UG miteinander verknüpft. Auf diese Weise entstehen am Ausgang des UND-Gliedes UG Pulse unterschiedlicher Länge, die nun dazu benutzt werden, einen weiteren, ebenfalls astabil - schwingenden Generator G3 ein-und auszuschalten. Dieser dritte Generator G3 schwingt im Vergleich zur Betriebsfrequenz der beiden ersten Generatoren G1, G2 mit einer deutlich höheren Frequenz f3, die beispielsweise um den Faktor 50 bis 100 höher liegen kann. Das während der Einschaltphase des Generators G3 entstehende Pulspaket wird schließlich im nachfolgenden Zähler Z gezählt. Da annähernd alle Komponenten der drei Generatoren mit einem Temperaturkoeffizienten behaftet sind und auch bei einem relativ hohen Integragrationsgrad der Schaltung kein homogener Temperaturgradient vorhanden sein wird, ist eine ausreichend hohe Gewähr dafür gegeben, daß die jeweils generierten Zufallszahlen im Hinblick auf die fälschungssichere Verschlüsselung der Daten genügend zufällig sein werden. Die Schaltung eignet sich insbesondere für Chipkarten und ist sowohl in TTl-als auch in MOS-Technik realisierbar.

**Ansprüche**

1. Schaltungsanordnung zur Generierung einer Zufallszahl für die verschlüsselte Übertragung von Daten innerhalb eines Systems mit mehreren Teilnehmern, deren Authentizität im System sichergestellt werden soll, insbesondere zur Verwendung in einem Kommunikationssystem, bei dem die Zugangsberechtigung der einzelnen Teilnehmer mit Hilfe einer Chip-Karte erfolgt, **gekennzeichnet durch** zwei mit unterschiedlicher Frequenz (f1, f2) astabil schwingende Generatoren (G1,G2), deren Ausgänge mit den Eingängen eines UNDGliedes (UG) verbunden sind und durch einen weiteren astabil schwingenden Generator (G3) mit einer im Vergleich zur Frequenz der beiden ersten Generatoren (G1,G2) deutlich höheren Frequenz (f3), der eingangsseitig mit dem Ausgang des UND-Gliedes (UG) und ausgangsseitig mit dem Eingang eines Zählers (Z) verbunden ist.

2. Schaltungsanordnung nach Anspruch 1, **dadurch gekennzeichnet,** daß für die einzelnen Generatoren jeweils Schmitt-Trigger vorgesehen sind.

3. Schaltungsanordnung nach Anspruch 1 oder 2, **dadurch gekennzeichnet,** daß die Frequenz eines der beiden ersten Generatoren (G1 bzw. G2) um den Faktor 2 bis 3 größer gewählt ist als die Frequenz des anderen Generators (G2 bzw. G1).

4. Schaltungsanordnung nach einem der vorhergehenden Ansprüche, **dadurch gekennzeichnet,** daß die Schaltung mit TTL-Gattern realisiert ist.

5. Schaltungsanordnung nach einem der Ansprüche 1 bis 3, **dadurch gekennzeichnet,** daß die Schaltung in MOS-Technik realisiert ist.

6. Schaltungsanordnung nach einem der vorhergehenden Ansprüche, **gekennzeichnet durch** ihre Implementierung im integrierten Baustein einer Chip-Karte.